# EUROPEAN PATENT APPLICATION

(11) **EP 4 670 801 A1**
(43) Date of publication of application: **31.12.2025**
(21) Application number: 25185010.3
(22) Date of filing: 24.06.2025
(51) Int. Cl.: A63B 53/02, A63B 60/50, A63B 60/52

(54) **GOLF CLUB**

(30) Priority: 26.06.2024 JP 2024102626
(71) Applicant: Mizuno Corporation, Osaka-shi, Osaka 541-8538 (JP)
(72) Inventor: DOI, Kazuhiro, Osaka-shi, Osaka, 559-8510 (JP); MAENAKA, Kensuke, Osaka-Shi, Osaka, 559-8510 (JP); YAMAZAKI, Keisuke, Yoro-gun, Gifu, 503-1314 (JP); OHTA, Yasuyuki, Osaka-shi, Osaka, 559-8510 (JP); LLEWELLYN, David, Norcross, GA, 30071 (US)
(74) Representative: Prüfer & Partner mbB Patentanwälte · Rechtsanwälte

(57) **Abstract**

A golf club (100) includes: a shaft (10); an adapter (20) having a shaft insertion portion (21) and a fixation portion (22); a head (30) having a hosel portion (31) provided with a hosel hole (32) and a through hole (33); and a retaining member (40) detachably attached to the through hole (33). The fixation portion (22) is smaller in a second direction (D2) than in a first direction (D1), the first direction (D1) being orthogonal to the central axis of the shaft insertion portion (21), the second direction (D2) being orthogonal to the first direction (D1). The retaining member (40) is configured to extend from a hosel outer wall (31a) through the through hole (33) in the second direction (D2) so as to press a cutaway portion (22a).

## Description

### CROSS REFERENCE TO RELATED APPLICATIONS

This nonprovisional application is based on Japanese Patent Application No. 2024-102626 filed on June 26, 2024 with the Japan Patent Office, the entire contents of which are hereby incorporated by reference.

### BACKGROUND OF THE INVENTION

### Field of the Invention

The present invention relates to a golf club.

### Description of the Background Art

Japanese Patent No. 5670568 describes a golf club in which a combination of a shaft and a head is changeable. The golf club described in this publication includes a shaft, an adapter and a head. The adapter has a shaft insertion portion at one end and a fixation portion at the other end. The fixation portion of the adapter is provided at a position that is eccentric with respect to a central axis of the shaft insertion portion. The head has a hosel hole into which the adapter is inserted.

In the golf club described in this publication, the fixation portion of the adapter is provided at the position that is eccentric with respect to the central axis of the shaft insertion portion. Therefore, it is difficult to secure a thickness of a hosel portion of the head into which the adapter is inserted.

### SUMMARY OF THE INVENTION

The present invention has been made in view of the above-described problem, and an object thereof is to provide a golf club in which a combination of a shaft and a head is changeable and a thickness of a hosel portion is easily secured.

A golf club of the present invention includes: a shaft; an adapter having a shaft insertion portion and a fixation portion, the shaft insertion portion being provided with a shaft insertion hole for fixing the shaft, the fixation portion being provided to coincide with a central axis of the shaft insertion portion and being provided with a cutaway portion at least in a part of a circumferential wall surface; a head having a hosel portion, the hosel portion being provided with a hosel hole into which the adapter is inserted, and a through hole located at a position corresponding to the cutaway portion of the fixation portion and extending from a hosel outer wall to the hosel hole; and a retaining member detachably attached to the through hole of the hosel portion of the head. The fixation portion is smaller in a second direction than in a first direction, the first direction being orthogonal to the central axis of the shaft insertion portion, the second direction being orthogonal to the first direction. The retaining member is configured to extend from the hosel outer wall through the through hole in the second direction so as to press the cutaway portion.

According to the golf club of the present invention, a combination of a shaft and a head is changeable and a thickness of a hosel portion is easily secured.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a front view schematically showing a configuration of a golf club according to an embodiment.
Fig. 2 is a partially exploded front view schematically showing the configuration of the golf club according to the embodiment.
Fig. 3 is a right side view schematically showing a configuration of an adapter of the golf club according to the embodiment.
Fig. 4 is a rear view schematically showing the configuration of the adapter of the golf club according to the embodiment.
Fig. 5 is a partially enlarged front view of a head of the golf club according to the embodiment.
Fig. 6 is a partially enlarged plan view of the head of the golf club according to the embodiment.
Fig. 7 is a partially enlarged cross-sectional view of a portion VII in Fig. 1.
Fig. 8 is a right side view schematically showing the configurations of the adapter and the head of the golf club according to the embodiment.
Fig. 9 is a right side view schematically showing a configuration of a modification of the adapter of the golf club according to the embodiment.
Fig. 10 is a rear view schematically showing the configuration of the modification of the adapter of the golf club according to the embodiment.

### DESCRIPTION OF THE PREFERRED EMBODIMENTS

Hereinafter, an embodiment of the present invention will be described with reference to the drawings. Unless otherwise mentioned, the same or corresponding portions in the drawings below are denoted by the same reference characters and description thereof will not be repeated.

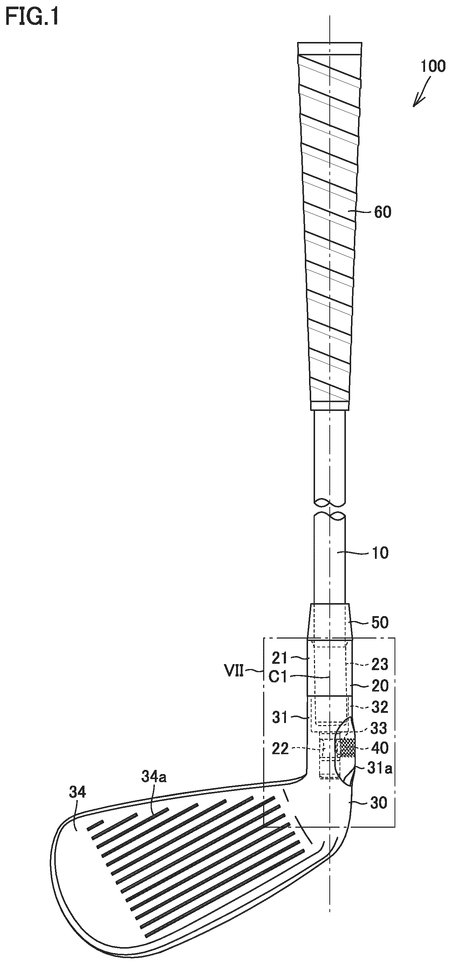

A golf club 100 according to an embodiment will be described with reference to Figs. 1 to 8.

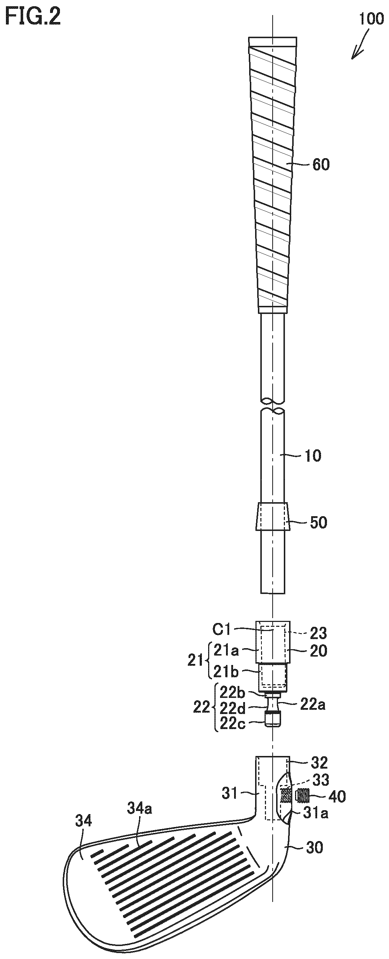

As shown in Figs. 1 and 2, golf club 100 according to the embodiment includes a shaft 10, an adapter 20, a head 30, and a retaining member 40. Golf club 100 according to the embodiment also includes a socket 50 and a grip 60.

Shaft 10 is implemented by a tubular body formed by stacking prepregs made of a fiber-reinforced resin, a tubular body made of metal, or a tubular body formed of a composite thereof.

Adapter 20 is attached to one end of shaft 10. Adapter 20 has a shaft insertion portion 21 and a fixation portion 22.

Shaft insertion portion 21 is disposed at one end of adapter 20. Shaft insertion portion 21 is provided with a shaft insertion hole 23 for fixing shaft 10. Shaft insertion hole 23 is provided in an end face of one end of adapter 20. Shaft insertion hole 23 extends from the end face of one end of adapter 20 along a central axis of adapter 20. One end of shaft 10 is inserted into shaft insertion hole 23. One end of shaft 10 is fixed to shaft insertion portion 21 using an adhesive or the like, with one end of shaft 10 inserted into shaft insertion hole 23.

Fixation portion 22 is disposed at the other end of adapter 20. Fixation portion 22 is provided to coincide with a central axis C1 of shaft insertion portion 21. Fixation portion 22 is provided with a cutaway portion 22a at least in a part of a circumferential wall portion.

Although adapter 20 can be made of a metal material such as stainless steel, a titanium alloy or an aluminum alloy, an engineering plastic, a fiber-reinforced resin or the like, a metal material excellent in fatigue characteristics is more desirably used. Shaft insertion portion 21 and fixation portion 22 are desirably made by integral molding.

Head 30 is attached to adapter 20. Head 30 has a hosel portion 31. Hosel portion 31 is provided with a hosel hole 32 into which adapter 20 is inserted. Hosel portion 31 is provided with a through hole 33 located at a position corresponding to cutaway portion 22a of fixation portion 22 and extending from a hosel outer wall 31a to hosel hole 32, with adapter 20 inserted to a position where adapter 20 can be inserted into hosel hole 32. Through hole 33 is provided on the heel side of hosel portion 31 in a toe-heel direction. Through hole 33 is provided with a screw groove. Head 30 has a face portion 34. Face portion 34 is provided with a plurality of score lines 34a.

Head 30 is of iron type. Head 30 is made of a metal material including an iron-based alloy such as carbon steel or stainless steel, titanium, a titanium alloy or the like through casting or forging. Head 30 may be made of a single material, or may be formed by joining a plurality of materials. Head 30 and adapter 20 are desirably made of a material having the same or substantially the same specific gravity.

Retaining member 40 is detachably attached to through hole 33 of hosel portion 31 of head 30. Retaining member 40 is provided with a screw thread. By tightening retaining member 40 inside through hole 33, falling-off of adapter 20 from hosel hole 32 is prevented. By loosening retaining member 40 from through hole 33, adapter 20 can be removed from hosel hole 32. Retaining member 40 is a stainless screw.

Socket 50 is attached to shaft 10. Socket 50 is disposed to be adjacent to adapter 20. Socket 50 is a socket made of a resin.

Grip 60 is attached to the other end of shaft 10. A main material of grip 60 is natural rubber, synthetic rubber or the like.

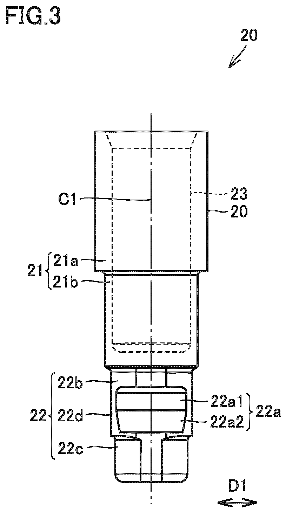

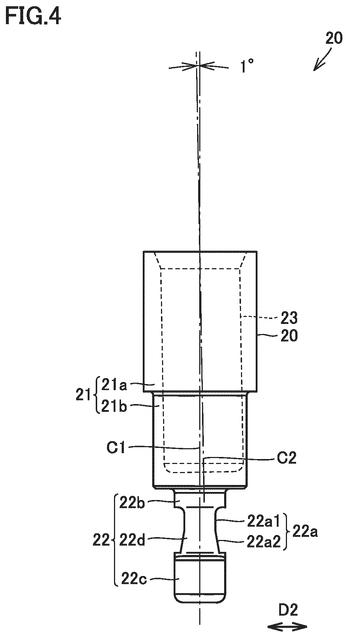

As shown in Figs. 3 and 4, shaft insertion portion 21 has a first portion 21a and a second portion 21b. First portion 21a is disposed at one end of adapter 20. Second portion 21b is adjacent to first portion 21a. Second portion 21b is smaller in diameter than first portion 21a. Shaft insertion hole 23 is provided to extend through first portion 21a to somewhere in second portion 21b.

Fixation portion 22 is smaller in a second direction D2 than in a first direction D1, first direction D1 being orthogonal to central axis C1 of shaft insertion portion 21, second direction D2 being orthogonal to first direction D1 and orthogonal to central axis C1. Second direction D2 is orthogonal to both first direction D1 and central axis C1 of shaft insertion portion 21. Fixation portion 22 is configured to have a substantially elliptical columnar shape formed by extending an ellipse having a major axis in first direction D1 into a columnar shape, and a side surface thereof is provided with cutaway portion 22a described below. A contour shape obtained when fixation portion 22 is projected in a direction in which central axis C1 extends is an elliptical shape having a longer direction in first direction D1 and including straight sections in the longer direction.

Cutaway portion 22a is provided on each of both sides of fixation portion 22 in second direction D2. Cutaway portions 22a provided on both sides of fixation portion 22 are configured to be symmetric with respect to the center of fixation portion 22.

Cutaway portion 22a includes a parallel portion 22a1 and a tapered portion 22a2. Parallel portion 22a1 is disposed on the root side of fixation portion 22. Tapered portion 22a2 is connected to parallel portion 22a1 and is disposed on the tip side of fixation portion 22. Parallel portion 22a1 is configured to be parallel to central axis C1 of shaft insertion portion 21. Tapered portion 22a2 is configured such that a thickness thereof increases continuously from parallel portion 22a1.

Fixation portion 22 includes a root portion 22b disposed at a root of fixation portion 22, a tip portion 22c disposed at a tip of fixation portion 22, and a central portion 22d disposed between root portion 22b and tip portion 22c. Cutaway portion 22a is provided in central portion 22d. Tip portion 22c is smaller than central portion 22d in first direction D1.

A shaft insertion hole central axis C2 of shaft insertion hole 23 is inclined with respect to central axis C1 of shaft insertion portion 21. In the present embodiment, shaft insertion hole central axis C2 of shaft insertion hole 23 is inclined in second direction D2 with respect to central axis C1 of shaft insertion portion 21. Specifically, shaft insertion hole central axis C2 of shaft insertion hole 23 is inclined by an angle of 1° in second direction D2 with respect to central axis C1 of shaft insertion portion 21.

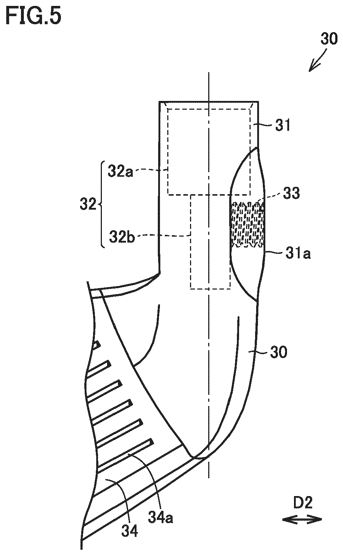

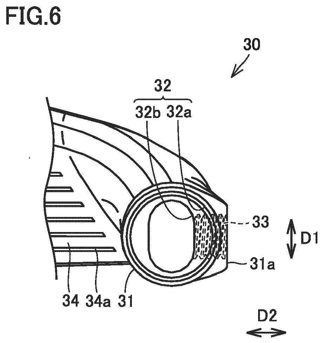

As shown in Figs. 5 and 6, hosel hole 32 includes a first hole portion 32a and a second hole portion 32b. First hole portion 32a is configured such that second portion 21b of shaft insertion portion 21 is inserted thereinto. First hole portion 32a is configured to have a circular shape. Second hole portion 32b is configured such that fixation portion 22 is inserted thereinto. Second hole portion 32b has an elliptical shape having a longer direction in a face-back direction and including straight sections in the longer direction. The longer direction of second hole portion 32b corresponds to first direction D1 and a shorter direction of second hole portion 32b corresponds to second direction D2.

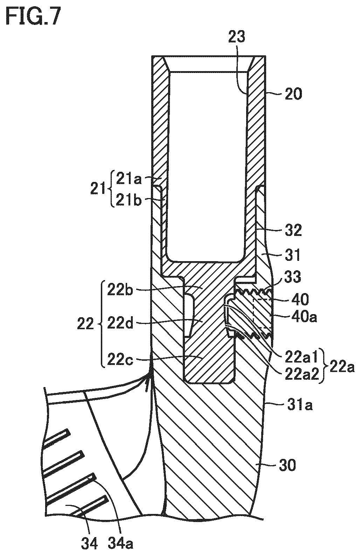

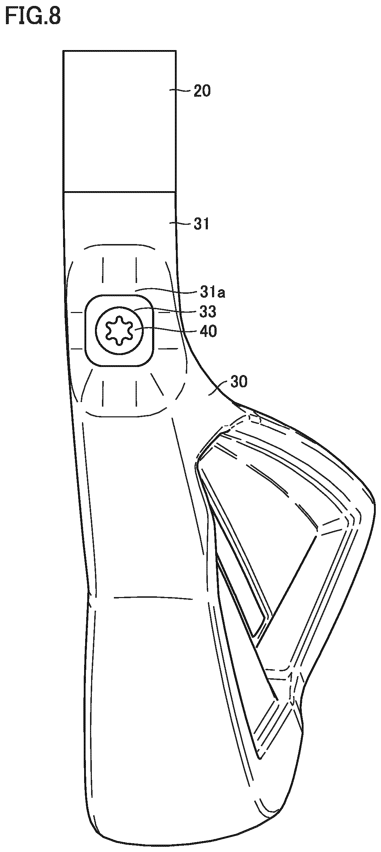

As shown in Figs. 7 and 8, retaining member 40 is attached to through hole 33 of hosel portion 31 of head 30. Retaining member 40 is configured to extend from hosel outer wall 31a through through hole 33 in second direction D2 so as to press cutaway portion 22a. By inserting a tool such as a wrench into a recessed portion 40a provided at one end of retaining member 40 and rotating the tool, retaining member 40 can be rotated together with the tool. As a result, the screw thread of retaining member 40 engages with the screw groove of through hole 33, which makes it possible to attach and detach retaining member 40 to and from hosel portion 31. In order to secure the number of screw taps, a portion around through hole 33 of hosel portion 31 rises.

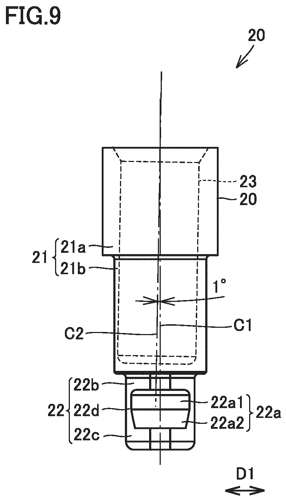

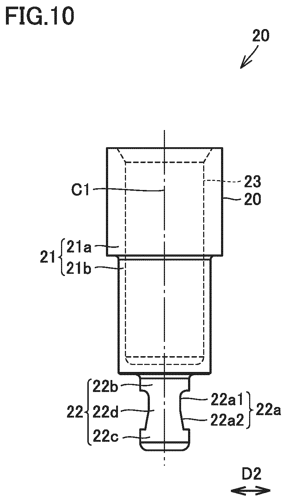

A modification of golf club 100 according to the embodiment will be described with reference to Figs. 9 and 10.

In the modification of golf club 100 according to the embodiment, shaft insertion hole central axis C2 of shaft insertion hole 23 is inclined in first direction D1 with respect to central axis C1 of shaft insertion portion 21. Specifically, shaft insertion hole central axis C2 of shaft insertion hole 23 is inclined by an angle of 1° in first direction D1 with respect to central axis C1 of shaft insertion portion 21. That is, in the modification of golf club 100 according to the embodiment, a direction in which shaft insertion hole central axis C2 is inclined with respect to central axis C1 of shaft insertion portion 21 is displaced by 90° from that in golf club 100 according to the embodiment.

Next, functions and effects of golf club 100 according to the embodiment will be described.

In golf club 100 according to the embodiment, retaining member 40 is detachably attached to through hole 33 of hosel portion 31 of head 30. Thus, by loosening retaining member 40 from through hole 33 of hosel portion 31, head 30 can be attached to and detached from adapter 20 and shaft 10 attached to adapter 20. Therefore, a combination of shaft 10 and head 30 is changeable.

In addition, retaining member 40 is configured to extend from hosel outer wall 31a through through hole 33 in second direction D2 so as to press cutaway portion 22a. Fixation portion 22 is smaller in second direction D2 than in first direction D1, and thus, a thickness of hosel portion 31 in second direction D2 can be made thicker than that in first direction D1. Therefore, the thickness of hosel portion 31 is easily secured.

Furthermore, a golfer himself/herself can check the performance by hitting a ball using golf club 100 assembled with arbitrary head 30 and arbitrary shaft 10 that the golfer wants to use, and if something is wrong, the golfer can replace head 30 or shaft 10 with another head 30 or shaft 10 and check the performance. Therefore, a custom fitting system with high accuracy can be achieved.

In addition, fixation portion 22 is smaller in second direction D2 than in first direction D1. Therefore, since fixation portion 22 does not have a cylindrical shape, rotation of fixation portion 22 in hosel hole 32 can be prevented.

In golf club 100 according to the embodiment, cutaway portion 22a is provided on each of both sides of fixation portion 22 in second direction D2. Therefore, adapter 20 can be positioned to correspond to both sides of fixation portion 22 and fitted into head 30. Thus, adapter 20 can be fitted into head 30 only in desired two directions.

In golf club 100 according to the embodiment, parallel portion 22a1 of cutaway portion 22a is disposed on the root side of fixation portion 22. Tapered portion 22a2 is configured such that a thickness thereof increases continuously from parallel portion 22a1. Therefore, as compared with the case in which cutaway portion 22a includes only tapered portion 22a2 and there is no parallel portion 22a1, the insufficient strength caused by the excessively thin root of tapered portion 22a2 can be inhibited by parallel portion 22a1. Thus, the strength of cutaway portion 22a can be secured by parallel portion 22a1 and falling-off of fixation portion 22 can be prevented by tapered portion 22a2.

In golf club 100 according to the embodiment, tip portion 22c is smaller in length than central portion 22d in first direction D1. Thus, the thickness of hosel portion 31 in the portion where tip portion 22c is disposed can be further increased. Therefore, the thickness of hosel portion 31 can be further secured.

In golf club 100 according to the embodiment, shaft insertion hole central axis C2 of shaft insertion hole 23 is inclined with respect to central axis C1 of shaft insertion portion 21. Thus, a lie angle or a loft angle of golf club 100 can be adjusted.

In golf club 100 according to the embodiment, shaft insertion hole central axis C2 of shaft insertion hole 23 is inclined in first direction D1 or second direction D2 with respect to central axis C1 of shaft insertion portion 21. Thus, in golf club 100 for an iron, by inclining shaft insertion hole central axis C2 of shaft insertion hole 23 in second direction D2 with respect to central axis C1 of shaft insertion portion 21, the lie angle can be adjusted. In the modification of golf club 100 according to the embodiment, by inclining shaft insertion hole central axis C2 of shaft insertion hole 23 in first direction D1 with respect to central axis C1 of shaft insertion portion 21, the loft angle can be adjusted.

When golf club 100 according to the embodiment is used as a golf club for custom fitting, the position of the center of gravity and the moment of inertia of head 30 is desirably brought close to the position of the center of gravity and the moment of inertia of a product head corresponding to head 30, in order to increase the accuracy as a fitting tool. **In** golf club 100 according to the embodiment, the thickness of hosel portion 31 is easily secured. Thus, adapter 20 can be inserted deeply into hosel portion 31. As a result, a dimension from a sole of head 30 to an upper end of adapter 20 can be the same as that of the product head corresponding to head 30. Therefore, the position of the center of gravity and the moment of inertia of head 30 can be brought close to the position of the center of gravity and the moment of inertia of the product head corresponding to head 30. Furthermore, the flexibility of shaft 10 can also be brought close to that of the product. Therefore, the accuracy as a fitting tool can be increased.

Although the embodiment of the present invention has been described, it should be understood that the embodiment disclosed herein is illustrative and non-restrictive in every respect. The scope of the present invention is defined by the terms of the claims, and is intended to include any modifications within the scope and meaning equivalent to the terms of the claims.

## Claims

1. A golf club (100) comprising:
a shaft (10);
an adapter (20) having a shaft insertion portion (21) and a fixation portion (22), the shaft insertion portion (21) being provided with a shaft insertion hole (23) for fixing the shaft (10), the fixation portion (22) being provided to coincide with a central axis (C1) of the shaft insertion portion (21) and being provided with a cutaway portion (22a) at least in a part of a circumferential wall surface;
a head (30) having a hosel portion (31), the hosel portion (31) being provided with a hosel hole (32) into which the adapter (20) is inserted, and a through hole (33) located at a position corresponding to the cutaway portion (22a) of the fixation portion (22) and extending from a hosel outer wall (31a) to the hosel hole (32); and
a retaining member (40) detachably attached to the through hole (33) of the hosel portion (31) of the head (30), wherein
the fixation portion (22) is smaller in a second direction (D2) than in a first direction (D1), the first direction (D1) being orthogonal to the central axis (C1) of the shaft insertion portion (21), the second direction (D2) being orthogonal to the first direction (D1), and
the retaining member (40) is configured to extend from the hosel outer wall (31a) through the through hole (33) in the second direction (D2) so as to press the cutaway portion (22a).

2. The golf club (100) according to claim 1, wherein
the cutaway portion (22a) is provided on each of both sides of the fixation portion (22) in the second direction (D2).

3. The golf club (100) according to claim 1 or 2, wherein
the cutaway portion (22a) includes a parallel portion (22a1) disposed on a root side of the fixation portion (22), and a tapered portion (22a2) connected to the parallel portion (22a1) and disposed on a tip side of the fixation portion (22),
the parallel portion (22a1) is configured to be parallel to the central axis (C1) of the shaft insertion portion (21), and
the tapered portion (22a2) is configured such that a thickness thereof increases continuously from the parallel portion (22a1).

4. The golf club (100) according to claim 1 or 2, wherein
the fixation portion (22) includes a root portion (22b) disposed at a root of the fixation portion (22), a tip portion (22c) disposed at a tip of the fixation portion (22), and a central portion (22d) disposed between the root portion (22b) and the tip portion (22c),
the cutaway portion (22a) is provided in the central portion (22b), and
the tip portion (22c) is smaller than the central portion (22d) in the first direction (D1).

5. The golf club (100) according to claim 1 or 2, wherein
a shaft insertion hole central axis (C2) of the shaft insertion hole (23) is inclined with respect to the central axis (C1) of the shaft insertion portion (21).

6. The golf club (100) according to claim 5, wherein
the shaft insertion hole central axis (C2) of the shaft insertion hole (23) is inclined in the first direction (D1) or the second direction (D2) with respect to the central axis (C1) of the shaft insertion portion (21).
